# EUROPÄISCHE PATENTSCHRIFT

(11) **EP 0 499 859 B1**
(45) Veröffentlichungstag und Bekanntmachung des Hinweises auf die Patenterteilung: **24.05.1995**
(21) Anmeldenummer: 92101596.2
(22) Anmeldetag: 31.01.1992
(51) Int. Cl.: B01D 25/172, B01D 25/38, B01D 35/31

(54) **Filtrieranlage**
Filtration installation
Installation de filtration

(30) Priorität: 20.02.1991 CH 513/91
(43) Veröffentlichungstag der Anmeldung: 26.08.1992
(73) Patentinhaber: VON ROLL AG, 4563 Gerlafingen (CH)
(72) Erfinder: Spiegel, Peter, CH-4624 Oberbuchsiten (CH); Käch, Hans, CH-3145 Niederscherli (CH)
(74) Vertreter: EGLI-EUROPEAN PATENT ATTORNEYS

(56) Entgegenhaltungen:
- DE-A- 3 816 886
- FR-A- 2 354 798
- US-A- 3 216 429
- US-A- 4 299 245

## Beschreibung

Die Erfindung betrifft eine Filtrieranlage gemäss dem Oberbegriff des Anspruchs 1. Derartige Anlagen sind zum Beispiel in der FR-A-2 354 798 und in der DE-A-3 816 886 beschrieben. Diese Anlagen werden auf vielen technischen Gebieten zur Abtrennung von Schwebstoffen aus einer Flüssigkeit verwendet. Eine typische Anwendung ist die kommunale und industrielle Schlammentwässerung. Es gibt jedoch auch andere Einsatzgebiete, etwa in der Chemie, der Lebensmittelindustrie und der Medizintechnik.

Es ist eine Filtrieranlage bekannt mit einer Filterpresse und einer Reinigungsanlage, welche als längs der Filterpresse verfahrbarer Rahmen ausgebildet ist, der ein schwenkbares Spritzrohr trägt. Die mit Filtertüchern bespannten Filterplatten werden unmittelbar in der Filterpresse abgespritzt. Für die meisten Anwendungsbereiche ist eine derartige Reinigung völlig adäquat. Es gibt jedoch auch Einsatzgebiete, etwa in der Medizintechnik, welche so hohe Anforderungen an die Reinheit der abgetrennten Flüssigkeit mit sich bringen, dass das Absetzen von beim Abspritzen erzeugten Aerosolen auf bereits gereinigten Filterplatten nicht toleriert werden kann. Ausserdem können solche Aerosole unter Umständen ein Gesundheitsrisiko für das Bedienungspersonal oder eine Gefährdung der Umwelt bedeuten.

Hier will die Erfindung mit den Merkmalen des kennzeichnenden Teils des Anspruchs 1 Abhilfe schaffen. Die Erfindung, wie sie in den Ansprüchen gekennzeichnet ist, schafft eine Filtrieranlage, bei der Gasaustausch zwischen dem Ort, an dem die Reinigung der Platten vorgenommen wird und der Umgebung, insbesondere der bereits gereinigte Filterplatten enthaltenden Filterpresse weitgehend unterbunden oder jedenfalls auf ein nach Massgabe der Anwendung unschädliches Mass reduziert ist.

Die durch die Erfindung erreichten Vorteile sind vor allem darin zu sehen, dass der mögliche Anwendungsbereich von gattungsgemässen Filtrieranlagen auf Gebiete erweitert wird, auf denen, etwa aus hygienischen Gründen, die Anforderungen an die säuberliche Abtrennung einer Flüssigkeit von in ihr enthaltenen Schwebstoffen besonders hoch sind oder wo die Schwebstoffe umweltschädliche oder für das Bedienungspersonal gefährliche Komponenten enthalten können und das, ohne dass der Filtriervorgang wesentlich kompliziert oder verlangsamt würde. Erfindungsgemässe Filtrieranlagen eignen sich insbesondere für den Einsatz in der Medizintechnik, etwa zum Filtrieren von Blutplasma.

Im folgenden wird die Erfindung anhand von nur einen Ausführungsweg darstellenden Zeichnungen näher erläutert. Es zeigen
- Fig. 1: eine erfindungsgemässe Filtrieranlage im Seitenriss,
- Fig. 2: die Filtrieranlage nach Fig. 1 im Querschnitt,
- Fig. 3: vergrössert einen Ausschnitt aus Fig. 2, teilweise geschnitten,
- Fig. 4a: einen Querschnitt durch die Reinigungsanlage,
- Fig. 4b: einen horizontalen Schnitt durch die Reinigungsanlage,
- Fig. 5a-f: das Entleeren der Filterpresse,
- Fig. 6a-g: das Reinigen der Filterplatten.

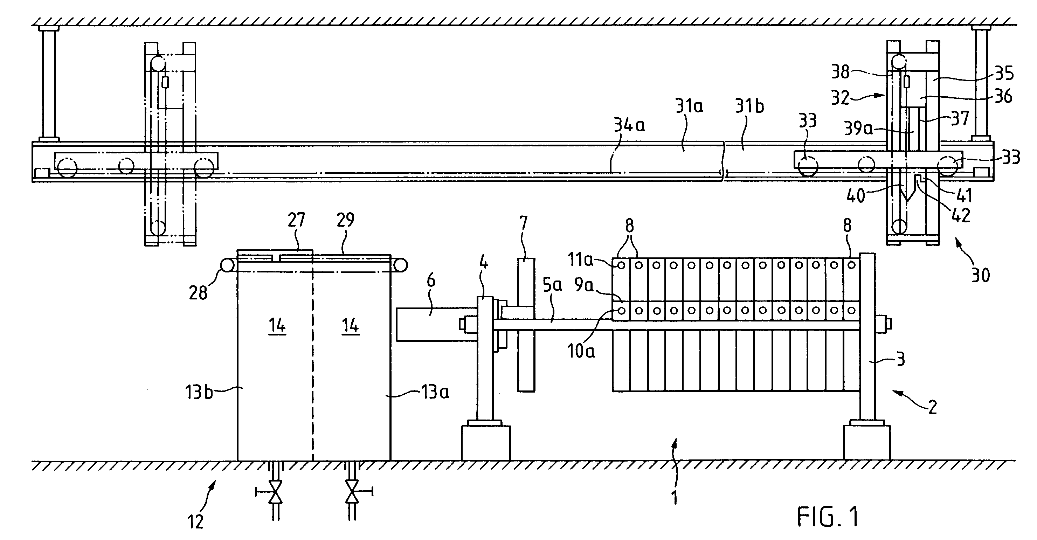

Die Filtrieranlage umfasst eine Filterpresse 1 mit einem Pressenrahmen 2 bestehend aus einem Kopfständer 3, einem Zylinderständer 4 und Holmen 5a,b, welche beide verbinden. Der Zylinderständer 4 trägt einen Schubkolbenantrieb 6 zur Betätigung einer Pressplatte 7, welche im Filterbetrieb eine Reihe von mit Filtertüchern bespannten Filterplatten 8 zusammendrückt, die jeweils mittels Abstützgriffen 9a,b auf den Holmen 5a,b abgestützt sind. In Fig. 1 ist die Filterpresse 1 geöffnet dargestellt. Seitlich an den Abstützgriffen 9a,b sind Mitnehmerbolzen 10a,b angebracht und an ihrem oberen Ende trägt jede Filterplatte 8 zwei Tragbolzen 11a,b.

In Längsrichtung neben der Filterpresse 1 ist eine Reinigungsanlage 12 mit zwei Waschkammern 13a,b angeordnet. Die quaderförmigen Gehäuse 14 der Waschkammern 13a,b sind zur Aufnahme jeweils einer Filterplatte 8 geeignet. Jede der Waschkammern 13a,b enthält ein den Seitenwänden entlanggeführtes geschlossenes Spritzrohr 15, das mittels eines Hülltriebs 16 auf und ab bewegt werden kann und über ein Ventil 17 mit einem der Zufuhr von Reinigungsflüssigkeit dienenden Anschluss 18 verbunden ist. Ausserdem ist jede der Waschkammern 13a,b mit einer Zuleitung 19 versehen, die über Ventile 20 und 21 bzw. 22 mit einem Sauggebläse 23 und einem Trocknungsgebläse 24 verbunden ist. Zur Ableitung gebrauchter Reinigungsflüssigkeit dient ein Ablauf 25. Ein Haltebock 26 dient zur sicheren Abstützung der zu reinigenden Filterplatte 8. Die Waschkammern 13a,b sind an Boden und Seitenwänden wasserdicht ausgeführt, sodass sie auch mit Reinigungsflüssigkeit gefüllt werden können.

Die beiden Waschkammern 13a,b sind unmittelbar nebeneinander angeordnet, ihre Gehäuse 14 haben eine Wand gemeinsam. Ebenfalls gemeinsam haben sie einen Deckel 27, der mittels eines Hülltriebs 28 zwischen Oeffnungen 29 an den Oberseiten der Waschkammern 13a,b hin- und hergeschoben werden kann, sodass er abwechselnd die eine oder die andere der Oeffnungen 29 verschliesst.

Eine Transportvorrichtung 30 umfasst in Längsrichtung der Filterpresse 1 verlaufende, oberhalb derselben wie der Reinigungsanlage 12 aufgehängte Schienen 31a,b, welche eine Verfahrvorrichtung 32 tragen, die, mit Rädern 33 versehen und über Treibstöcke 34a,b angetrieben, längs den Schienen 31a,b verfahrbar ist. Im Rahmen 35 der Verfahrvorrichtung 32 ist eine Hubvorrichtung 36 verankert mit einem Greifer 37, der mittels eines Kettentriebs 38 auf und ab bewegt werden kann. Der Greifer 37 weist zwei Arme 39a,b auf, deren jeder am unteren Ende einen Trennkeil 40 und daneben einen Mitnehmerfinger 41 trägt, die zwischen sich einen nach unten offenen Schlitz 42 bilden. Weiter oben trägt der Greifer 37 zwei Greiferklinken 43a,b. Jede derselben weist eine Oese 44 auf, die an einem mittels eines Schubkolbentriebs 45 seitlich verschiebbaren Tragrohr 46 befestigt ist.

Im folgenden wird nun die Funktion der Filtrieranlage erläutert. Der Filtriervorgang selber ist seit langem bekannt und wird nicht näher erklärt.

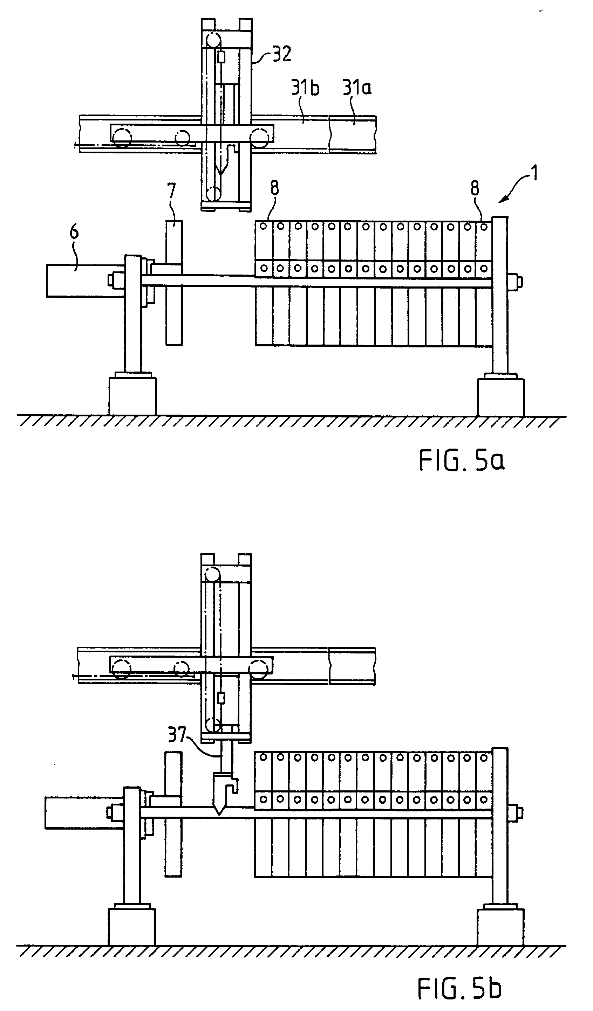

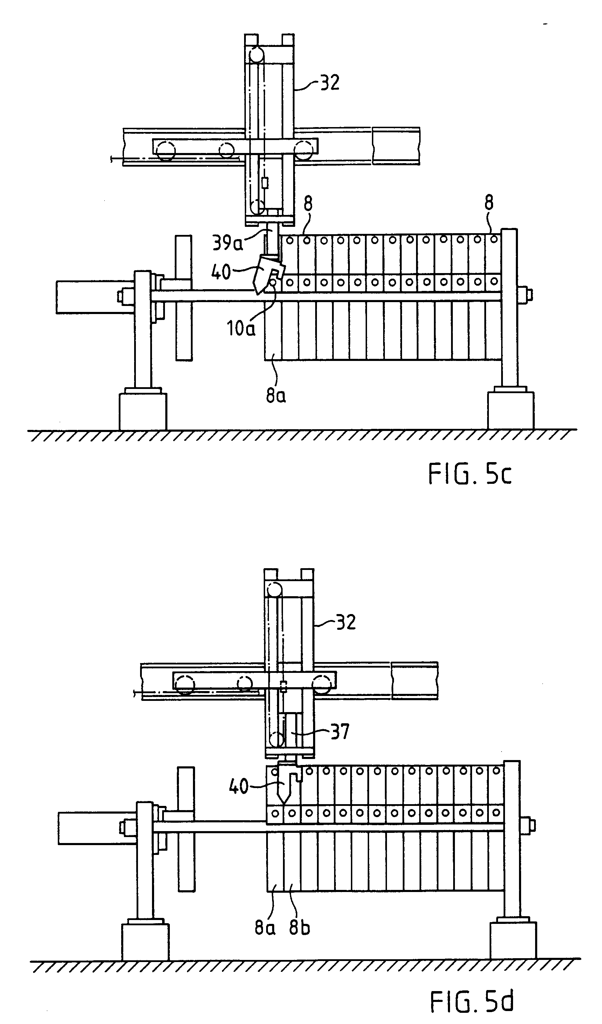

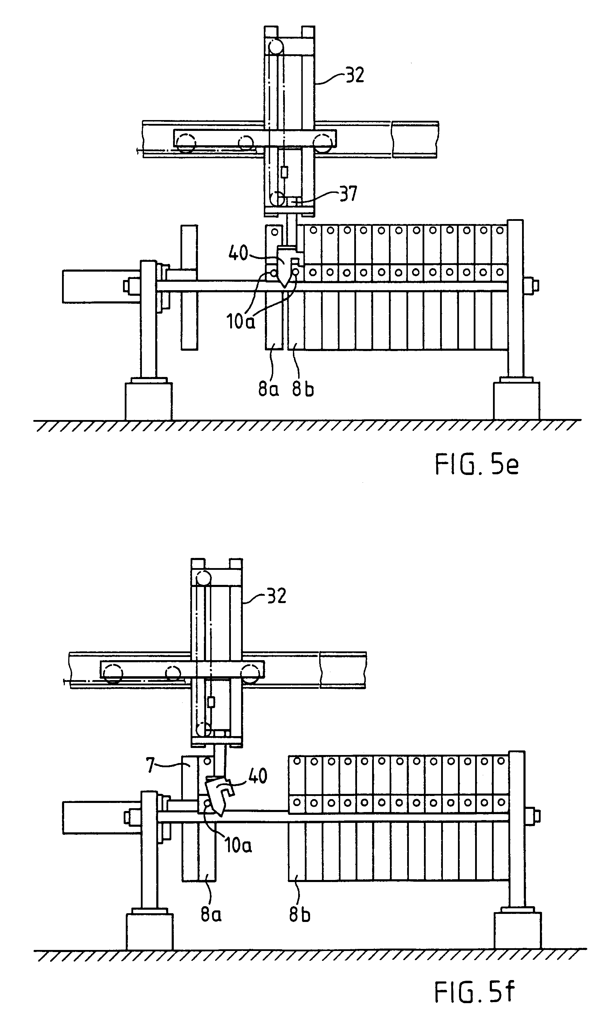

Wenn eine bestimmtes Quantum Trübe durch die Filterpresse 1 gepumpt worden ist und die Hohlräume zwischen den Filterplatten 8 mit Schwebestoffen gefüllt sind, wird mittels des Schubkolbenantriebs 6 die Pressplatte 7 von den Filterplatten 8 zurückgezogen. Die Verfahrvorrichtung 32 wird an den Schienen 31a,b aus einer Ruheposition (in Fig. 1 gestrichelt eingezeichnet) zwischen die Pressplatte 7 und die erste der Filterplatten 8 verschoben (Fig. 5a) und der Greifer 37 abgesenkt (Fig. 5b). Dann wird die Verfahrvorrichtung 32 weiter auf die Filterplatten 8 zu verschoben, bis die elastisch an den Armen 39a,b aufgehängten Trennkeile 40 an die Mitnehmerbolzen 10a,b der ersten Filterplatte 8a stossen und die Filterplatten 8 exakt quer zur Längsrichtung ausrichten (Fig. 5c).

Anschliessend wird der Greifer 37 leicht angehoben und die Verfahrvorrichtung 32 so weiterverschoben, dass die Trennkeile 40 schliesslich die Mitte zwischen der ersten Filterplatte 8a und der zweiten Filterplatte 8b halten (Fig. 5d). Anschliessend wird der Greifer 37 wieder gesenkt, sodass die Trennkeile 40 zwischen die Mitnehmerbolzen 10a,b der benachbarten Filterplatten 8a, 8b geschoben und diese getrennt werden (Fig. 5e).

Schliesslich wird die Verfahrvorrichtung 32 gegen die Pressplatte 7 verschoben, wobei sie über die Trennkeile 40 und die Mitnehmerbolzen 10a,b die erste Filterplatte 8a mitnimmt, bis diese an die Pressplatte 7 stösst. (Fig. 5f). Dann wird die Verfahrvorrichtung 32 in Richtung auf die verbleibenden Filterplatten 8 zu in Bewegung gesetzt und wieder in die in Fig. 5a gezeigte Position gebracht.

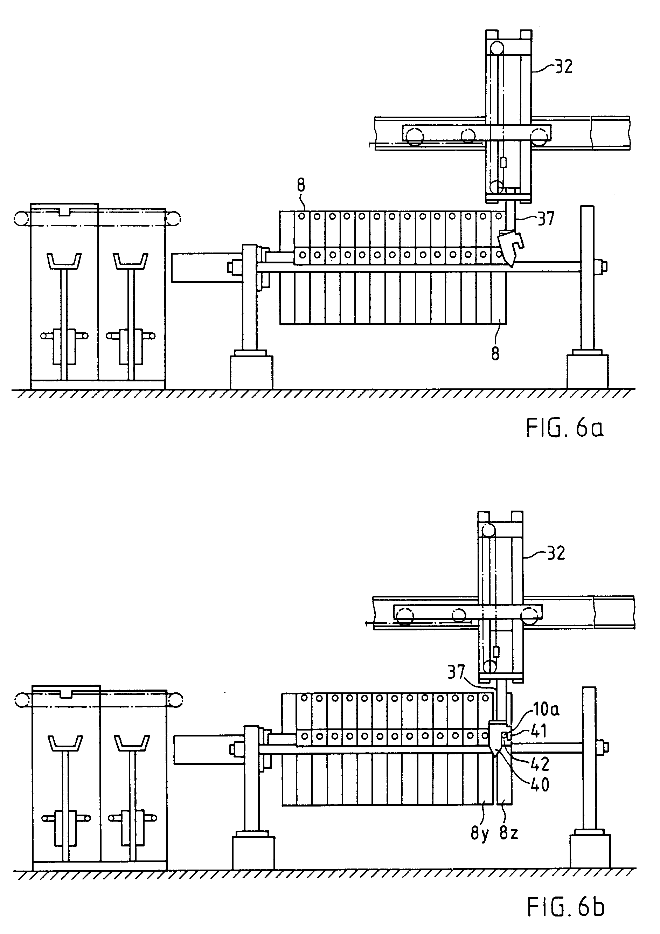

Der Vorgang wird wiederholt, bis sämtliche Filterplatten 8 verschoben und die von ihnen eingeschlossenen Hohlräume geleert sind (Fig. 6a).

Ausgehend von der in Fig. 6a dargestellten Position wird der Greifer 37 etwas angehoben, die Verfahrvorrichtung 32 verschoben, bis die Trennkeile 40 die Mitte halten zwischen der letzten Filterplatte 8z und der vorletzten Filterplatte 8y. Anschliessend wird der Greifer 37 abgesenkt, sodass die Trennkeile zwischen die Mitnehmerbolzen 10a,b der Filterplatten 8z, 8y geschoben werden und die letzteren trennen. Die Mitnehmerbolzen 10a,b der letzten Filterplatte 8z liegen dann jeweils in dem zwischen dem Trennkeil 40 und dem Mitnehmerfinger 41 gebildeten Schlitz 42, in welchen sie mit geringer Toleranz passen, sodass die Lage der Filterplatte 8z genau kontrolliert ist.

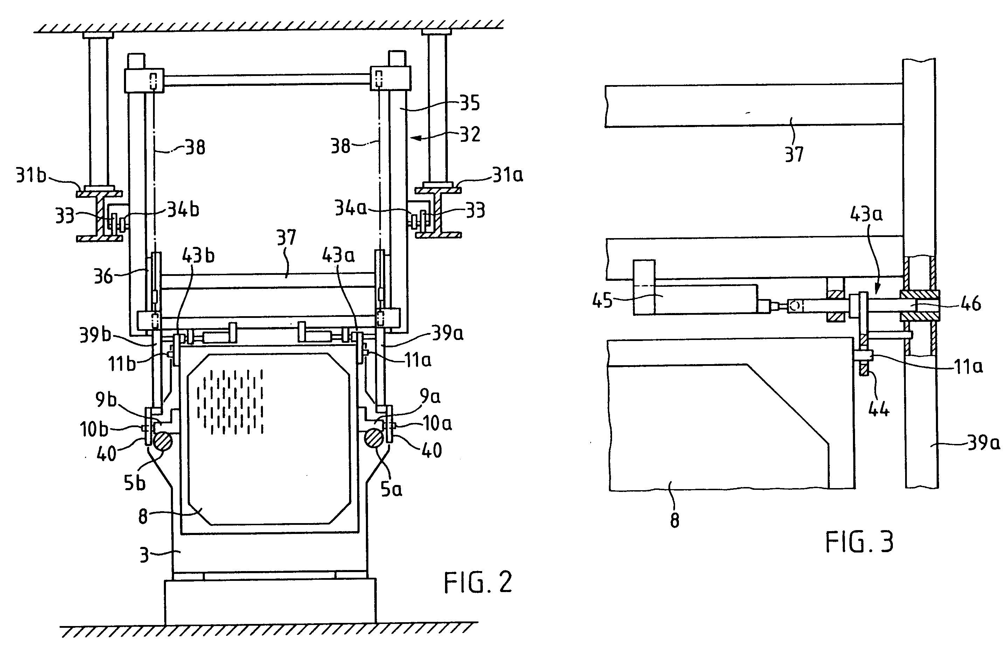

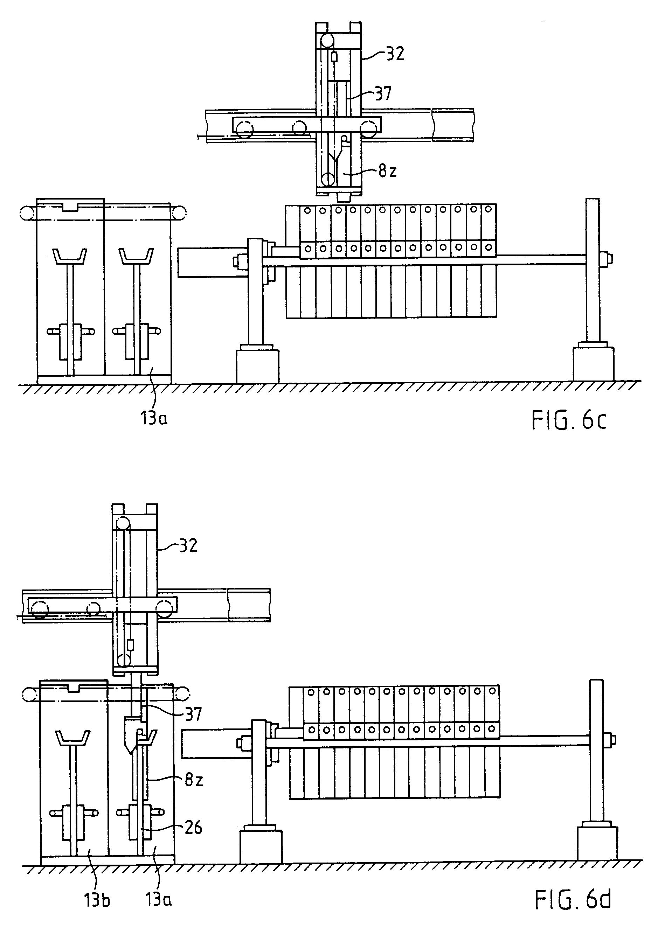

Nun werden (Fig. 2, 3) die Tragrohre 46 der Greiferklinken 43a,b mittels der Hubkolbentriebe 45 nach innen gezogen, sodass die Oesen 44 über die Tragbolzen 11a,b der Filterplatte 8z geschoben werden. Anschliessend wird der Greifer 37 samt der Filterplatte 8z angehoben und schliesslich die Verfahrvorrichtung 32 verschoben (Fig. 6c), bis sie über der Waschkammer 13a angelangt ist. Dort wird der Greifer 37 abgesenkt und die Filterplatte 8z auf dem Haltebock 26 abgesetzt (Fig. 6d). Anschliessend werden die Greiferklinken 43a,b wieder in die Entriegelungsposition geschoben und der Greifer 37 hochgezogen.

Dann wird der Deckel 27 mittels des Hülltriebs 28 aus der Position über der Waschkammer 13b über die Waschkammer 13a geschoben, deren Oeffnung 29 er verschliesst und die Filterplatte 8z gereinigt.

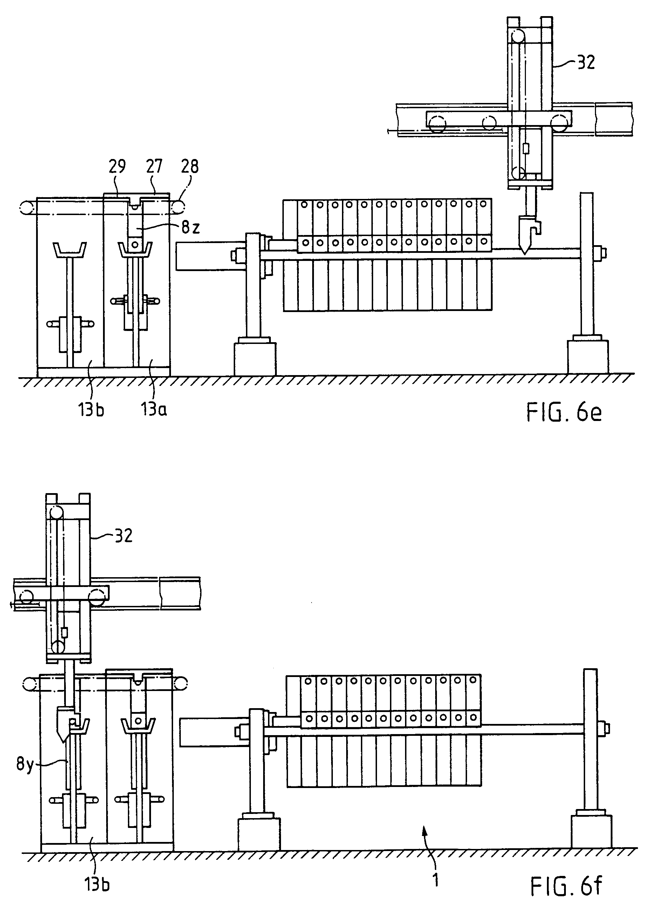

Während die Filterplatte 8z in der Waschkammer 13a gewaschen wird, wird durch die Verfahrvorrichtung 32 die nächste Filterplatte 8y aus der Filterpresse 1 geholt (Fig. 6e) und in der Waschkammer 13b abgesetzt (Fig. 6f). Der Waschvorgang in der Waschkammer 13a ist inzwischen beendet. Der Deckel 27 wird von der Waschkammer 13a zur Waschkammer 13b verschoben, d. h. erstere wird geöffnet und letztere verschlossen.

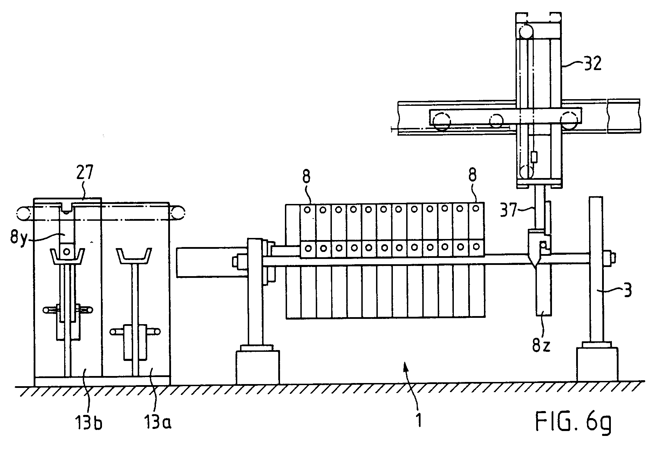

Während in der Waschkammer 13b nun die Filterplatte 8y gewaschen wird, wird die Filterplatte 8z in der Waschkammer 13a in bereits beschriebener Weise vom Greifer 37 gefasst, gehoben, zur Filterpresse 1 zurücktransportiert, dort abgesetzt (Fig. 6g) und gegen den Kopfständer 3 geschoben. Auf dem Rückweg nimmt die Verfahrvorrichtung 32 die nächste Filterplatte mit und setzt sie zur Reinigung in der Waschkammer 13a ab und so fort, bis sämtliche Filterplatten 8 sich gereinigt wieder in der Filterpresse 1 befinden, die daraufhin mittels der Pressplatte 7 geschlossen wird und für den nächsten Filtrationszyklus bereit ist.

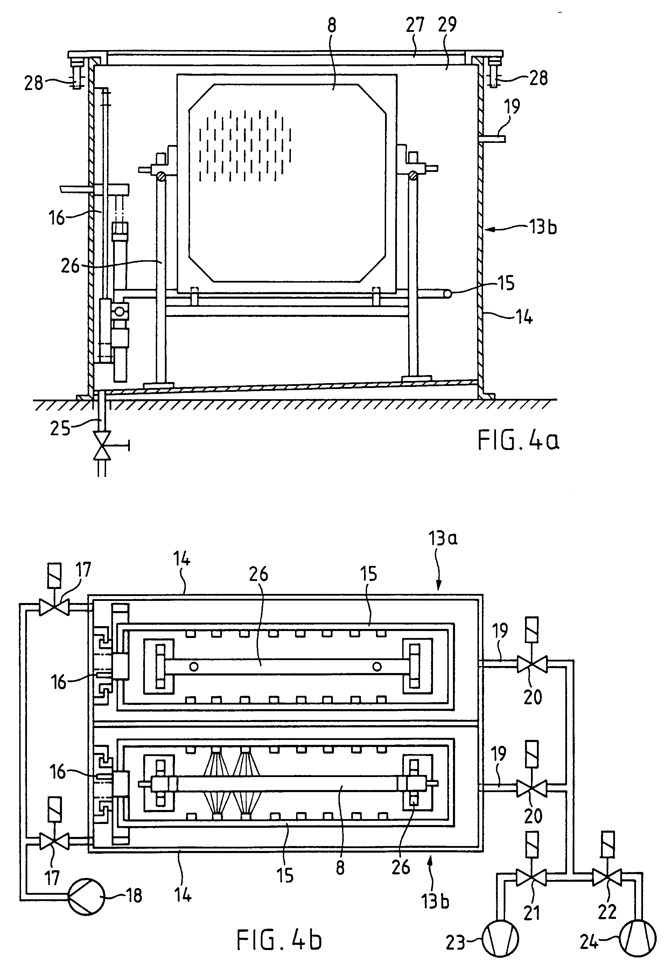

Die Reinigung einer Filterplatte 8 geht so vor sich (Fig. 4a,b), dass das Ventil 17 geöffnet und die Filterplatte 8 mittels des sie umgebenden Spritzrohrs 15, das auf und ab bewegt wird, mit Reinigungsflüssigkeit - Wasser, Seifenlösung oder anderem - abgespritzt wird. Die gebrauchte Reinigungsflüssigkeit läuft durch den Ablauf 25 ab. Gleichzeitig sind die Ventile 20 und 21 offen und das Sauggebläse 23 läuft. Dadurch wird die Luft aus der Waschkammer 13b, die stark mit beim Abspritzen erzeugten Aerosolen behaftet ist, stets abgezogen, sodass sich die Aerosole nicht wieder auf der Filterplatte 8 absetzen können.

Die Waschkammern 13a,b sind während des Waschens so dicht verschlossen, dass Gasaustausch mit der Region der Filterpresse 1, der zur Verunreinigung bereits gereinigter Filterplatten durch Aerosole führen könnte, praktisch vollständig unterbunden ist. Auch hier sind die erforderlichen Vorkehrungen natürlich vom Anwendungsgebiet abhängig. Unter Umständen kann auch blosse räumliche Trennung der Reinigungsanlage 12 von der Filterpresse 1 genügen.

Nach dem Abspritzen kann die Filterplatte 8 noch mit anderen Flüssigkeiten wie Desinfektions- oder Imprägniermitteln besprüht werden. Schliesslich wird noch durch das Trocknungsgebläse 24 über das Ventil 22 - das Ventil 21 ist dabei geschlossen - gefilterte Heissluft in die Waschkammer 13b geblasen und die Filterplatte 8 getrocknet. Selbstverständlich sind nicht immer alle aufgezählten Schritte nötig. Die Auswahl richtet sich nach der Anwendung.

Statt des Abspritzens oder zusätzlich zu demselben kann die Filterplatte 8 auch einem Tauchbad ausgesetzt werden, indem das wasserdichte Gehäuse 14 der Waschkammer 13b ganz mit Reinigungsflüssigkeit gefüllt wird.

Die Reinigungsanlage 12 mit zwei Waschkammern 13a,b auszurüsten, bringt den den Vorteil mit sich, dass Leerwege der Verfahrvorrichtung 32 weitgehend vermieden werden können.

Es sind verschiedene Kombinationen und Anordnungen von Filterpressen 1 und Reinigungsanlagen 12 möglich. Die Zahlenverhältnisse werden sich dabei nach dem Reinigungsbedarf und die Anordnung nach dem Platzangebot richten. Die Reinigungsanlage 12 in Längsrichtung neben der Filterplatte 1 anzuordnen ist insofern sehr günstig, als die Verfahrvorrichtung 32 nur in einer horizontalen Dimension verfahrbar sein muss und die Transportvorrichtung 30 dadurch sehr einfach aufgebaut sein kann.

Bei geringerem Reinigungsbedarf - die Reinigung braucht nicht in jedem Fall nach jeder Entleerung der Filterpresse durchgeführt zu werden - und genügend Platz nach einer Richtung ist es günstig, zwei Filterpressen in einer Linie mit einer Reinigungsanlage dazwischen aufzubauen. Es genügt dann eine Transportvorrichtung für beide Filterpressen.

## Patentansprüche

1. Filtrieranlage mit mindestens einer mehrere Filterplatten (8) enthaltenden Filterpresse (1) sowie mindestens einer Reinigungsanlage (12) zur Reinigung der Filterplatten (8), **dadurch gekennzeichnet**, **dass** die Reinigungsanlage (12) von der Filterpresse (1) derart räumlich getrennt angeordnet ist, dass Gasaustausch zwischen ihnen praktisch unterbunden ist und eine Transportvorrichtung (30) zum Verfahren der Filterplatten (8) zwischen der Filterpresse (1) und der Reinigungsanlage (12) vorhanden ist.

2. Filtrieranlage nach Anspruch 1, **dadurch gekennzeichnet**, **dass** zwischen Reinigungsanlage (12) und Filterpresse (1) eine mindestens während des Reinigungsvorgangs gegen Gasaustausch wirksame Abschirmung vorhanden ist.

3. Filtrieranlage nach Anspruch 2, **dadurch gekennzeichnet**, **dass** die mindestens eine Reinigungsanlage (12) mindestens eine Waschkammer (13a, 13b) enthält mit, in einem als Abschirmung wirkenden verschliessbaren Gehäuse (14), einer Abspritzvorrichtung.

4. Filtrieranlage nach Anspruch 3, **dadurch gekennzeichnet**, **dass** die Abspritzvorrichtung als Anordnung eines oder mehrerer den Innenwänden des Gehäuses entlang verschiebbare Spritzrohre (15) ausgebildet ist.

5. Filtrieranlage nach Anspruch 3 oder 4, **dadurch** **gekennzeichnet, dass** die mindestens eine Reinigungsanlage (12) mit einem mit der mindestens einen Waschkammer (13a, 13b) verbindbaren Sauggebläse (23) ausgestattet ist.

6. Filtrieranlage nach einem der Ansprüche 3 bis 5, **dadurch gekennzeichnet, dass** die Reinigungsanlage (12) mit einem mit der mindestens einen Waschkammer (13a, 13b) verbindbaren Trocknungsgebläse (24) ausgestattet ist.

7. Filtrieranlage nach einem der Ansprüche 3 bis 6, **dadurch gekennzeichnet, dass** das Gehäuse (14) der mindestens einen Waschkammer (13a, 13b) an seiner Oberseite eine durch einen Deckel (27) verschliessbare Oeffnung (29) aufweist.

8. Filtrieranlage nach einem der Ansprüche 3 bis 7, **dadurch gekennzeichnet, dass** die mindestens eine Reinigungsanlage (12) mindestens zwei Waschkammern (13a, 13b) umfasst.

9. Filtrieranlage nach den Ansprüchen 7 und 8, **dadurch gekennzeichnet, dass** die mindestens zwei Waschkammern (13a, 13b) unmittelbar nebeneinander angeordnet sind und die Reinigungsanlage (12) einen zwischen den Oeffnungen (29) der Gehäuse verschiebbaren Deckel (27) aufweist.

10. Filtrieranlage nach einem der Ansprüche 7 bis 9, **dadurch gekennzeichnet, dass** das Gehäuse (14) der mindestens einen Waschkammer (13a, 13b) an Boden und Seitenwänden wasserdicht ausgebildet ist.

11. Filtrieranlage nach einem der Ansprüche 1 bis 10, **dadurch gekennzeichnet, dass** die Transportvorrichtung (30) mindestens eine oberhalb der mindestens einen Filterpresse (1) und der mindestens einen Reinigungsanlage (12) verfahrbare Verfahrvorrichtung (32) umfasst.

12. Filtrieranlage nach Anspruch 11, **dadurch gekennzeichnet**, **dass** die Transportvorrichtung (30) mindestens eine Schiene (31a, 31b) umfasst, an welcher die mindestens eine Verfahrvorrichtung (32) aufgehängt und längs welcher sie verfahrbar ist.

13. Filtrieranlage nach Anspruch 11 oder 12, **dadurch gekennzeichnet**, **dass** die mindestens eine Verfahrvorrichtung (32) eine Hubvorrichtung (36) mit einem in vertikaler Richtung verschiebbaren Greifer (37) aufweist.

14. Filtrieranlage nach Anspruch 13, **dadurch gekennzeichnet**, **dass** die Filterpresse (1) zwei parallele Holme (5a, 5b) umfasst, die Filterplatten (8) mit seitlichen Abstützgriffen (9a, 9b) zur Abstützung an den Holmen (5a, 5b) ausgestattet sind und der Greifer (37) zwei Arme (39a, 39b) aufweist, deren jeder an seinem Ende einen zum Eingriff zwischen die Abstützgriffe (9a, 9b) zweier benachbarter Filterplatten (8) geeigneten Trennkeil (40) trägt.

15. Filtrieranlage nach Anspruch 14, **dadurch gekennzeichnet**, **dass** die Arme (39a, 39b) mit nach unten offenen Schlitzen (42) versehen sind und die Filterplatten (8) seitlich Mitnehmerbolzen (10a, 10b) tragen, welche mit höchstens geringer Toleranz in besagte Schlitze (42) passen.

16. Filtrieranlage nach einem der Ansprüche 13 bis 15, **dadurch gekennzeichnet**, **dass** der Greifer (37) mit Greiferklinken (43a, 43b) ausgestattet ist, welche zum Eingriff mit im Bereich von deren oberen Enden seitlich an den Filterplatten (8) angebrachten Anklinkvorrichtungen geeignet sind.

17. Filtrieranlage nach einem der Ansprüche 1 bis 16, **dadurch gekennzeichnet, dass** der mindestens einen Filterpresse (1) eine in Längsrichtung neben ihr angeordnete Reinigungsanlage (12) zugeordnet ist.

18. Filtrieranlage nach einem der Ansprüche 1 bis 16, **dadurch gekennzeichnet**, **dass** sie mindestens zwei in einer Linie angeordnete Filterpressen (1) aufweist, welchen eine zwischen ihnen angeordnete Reinigungsanlage (12) zugeordnet ist.

## Claims

1. A filter plant having at least one filter press (1) containing a plurality of filter plates (8) and at least one cleaning plant (12) for the cleaning of the filter plates (8), **characterized in that** the cleaning plant (12) is arranged spaced from the filter press (1) in such a manner that gas exchange between them is substantially prevented, and a transport device (30) for the transporting of the filter plates (8) is present between the filter press (1) and the cleaning plant (12).

2. A filtration plant according to Claim 1, **characterized in that** a screen which prevents gas exchange at least during the cleaning process is present between cleaning plant (12) and filter press (1).

3. A filtration plant according to Claim 2, **characterized in that** said at least one cleaning plant (12) contains at least one wash chamber (13a,b) with a spray device arranged in a closable housing (14), which housing acts as screen.

4. A filtration plant according to Claim 3, **characterized in that** the spray device is developed as arrangement of one or more spray pipes (15) which are displaceable along the inner walls of the housing.

5. A filtration plant according to Claim 3 or 4, **characterized in that** said at least one cleaning plant (12) is provided with a suction blower (23) which can be connected to said at least one wash chamber (13a,b).

6. A filtration plant according to one of Claims 3 to 5, **characterized in that** the cleaning plant (12) is provided with a drying blower (24) which can be connected to said at least one wash chamber (13a,b).

7. A filtration plant according to any of Claims 3 to 6, **characterized in that** the housing (14) of said at least one wash chamber (13a,b) has on top an opening (29) which can be closed by a cover (27).

8. A filtration plant according to one of Claims 3 to 7, **characterized in that** said at least one cleaning plant (12) comprises at least two wash chambers (13a,b).

9. A filtration plant according to Claims 7 and 8, **characterized in that** said at least two wash chambers (13a, b) are arranged directly alongside each other and the cleaning plant (12) has a cover (27) which can be displaced between the openings (29) of the housing.

10. A filtration plant according to any of Claims 7 to 9, **characterized in that** the housing (14) of said at least one wash chamber (13a, 13b) is watertight at its bottom and side walls.

11. A filtration plant according to any of Claims 1 to 10, **characterized in that** the transport device (30) comprises at least one displacement device (32) which is moveable above said at least one filter press (1) and said at least one cleaning plant (12).

12. A filtration plant according to Claim 11, **characterized in that** the transport device (30) comprises at least one rail (31a, 31b) on which said at least one displacement device (32) is suspended and along which it is moveable.

13. A filtration plant according to Claim 11 or 12, **characterized in that** said at least one displacement device (32) has a lift device (26) with a gripper (37) which is displaceable in vertical direction.

14. A filtration plant according to Claim 13, **characterized in that** the filter press (1) comprises two parallel spars (5a, 5b), the filter plates (8) are equipped with lateral support grips (9a, 9b) for support on the spars (5a, 5b) and the gripper (37) has two arms (39a, 39b) each of which bears at its end a separation wedge (40) suitable for engagement between the support grips (9a, 9b) of two adjacent filter plates (8).

15. A filtration plant according to Claim 14, **characterized in that** the arms (39a, 39b) are provided with downwardly open slots (42) and the filter plates (8) bear on the side driver bolts (10a, 10b) which fit in said slots (42) with at most a slight tolerance.

16. A filtration plant according to one of Claims 13 to 15, **characterized in that** the gripper (37) is provided with gripper pawls (43a, 43b) which are suitable for engagement with pawl-connection devices arranged laterally on the filter plates (8) in the region of the upper end of said plates.

17. A filtration plant according to any of Claims 1 to 16, **characterized in that** said at least one filter press (1) has, associated with it, a cleaning plant (12) arranged alongside of it in longitudinal direction.

18. A filtration plant according to any of Claims 1 to 16, **characterized in that** it has at least two filter presses (1) which are arranged in a line and with which there is associated a cleaning plant (12) which is arranged between them.

## Revendications

1. Installation de filtration comprenant au moins un filtre-presse (1) contenant plusieurs plaques filtrantes (8), ainsi qu'au moins une installation de nettoyage (12) pour le nettoyage des plaques filtrantes (8), caractérisée en ce que l'installation de nettoyage (12) est disposée en étant séparée dans l'espace du filtre-presse (1) de telle sorte qu'un échange de gaz entre eux est pratiquement empêché, un dispositif de transport (30) étant présent pour transporter les plaques filtrantes (8) entre le filtre-presse (1) et l'installation de nettoyage (12).

2. Installation de filtration selon la revendication 1, caractérisée en ce qu'entre l'installation de nettoyage (12) et le filtre-presse (1), est présent, au moins pendant le processus de nettoyage, un dispositif de protection actif contre l'échange de gaz.

3. Installation de filtration selon la revendication 2, caractérisée en ce que la ou les installations de nettoyage (12) contiennent au moins une chambre de nettoyage (13a, 13b) avec un dispositif de lavage au jet dans un logement (14) qui peut être fermé et qui fait office de dispositif de protection.

4. Installation de filtration selon la revendication 3, caractérisée en ce que le dispositif de lavage au jet est réalisé sous forme d'un arrangement d'un ou plusieurs tubes d'arrosage (15) aptes à se déplacer le long des parois internes du logement.

5. Installation de filtration selon la revendication 3 ou 4, caractérisée en ce que la ou les installations de nettoyage (12) sont équipées d'un ventilateur aspirant (23) qui peut être relié à la ou aux chambres de lavage (13a, 13b).

6. Installation selon les revendications 3 à 5, caractérisée en ce que l'installation de nettoyage (12) est équipée d'une soufflerie de séchage (24) qui peut être reliée à la ou aux chambres de lavage (13a, 13b).

7. Installation selon les revendications 3 à 6, caractérisée en ce que le logement (14) de la ou des chambres de lavage (13a, 13b) présente, sur son côté supérieur, une ouverture (29) qui peut être fermée par un couvercle (27).

8. Installation selon les revendications 3 à 7, caractérisée en ce que la ou les installations de nettoyage (12) comprennent au moins deux chambres de lavage (13a, 13b).

9. Installation selon les revendications 7 et 8, caractérisée en ce que les chambres de lavage (13a, 13b) au moins au nombre de deux sont disposées immédiatement l'une à côté de l'autre et l'installation de nettoyage (12) présente un couvercle (27) qui peut se déplacer entre les ouvertures (29) du logement.

10. Installation selon l'une quelconque des revendications 7 à 9, caractérisée en ce que le logement (14) de la ou des chambres de lavage (13a, 13b) est réalisé pour posséder une paroi inférieure et des parois latérales étanches à l'eau.

11. Installation selon l'une quelconque des revendications 1 à 10, caractérisée en ce que le dispositif de transport (30) comprend au moins un dispositif de déplacement (32) au-dessus du ou des filtres-presses (1) et de la ou des installations de nettoyage (12).

12. Installation selon la revendication 11, caractérisée en ce que le dispositif de transport (30) comprend au moins un rail (31a, 31b) auquel est suspendu le ou les dispositifs de déplacement (32) et le long duquel il peut se déplacer.

13. Installation selon la revendication 11 ou 12, caractérisée en ce que le ou les dispositifs de déplacement (32) présentent un dispositif de levage (36) muni d'un dispositif de préhension (37) apte à se déplacer en direction verticale.

14. Installation selon la revendication 13, caractérisée en ce que le filtre-presse (1) comprend deux poutres parallèles (5a, 5b), les plaques filtrantes (8) sont équipées de poignées d'appui latérales (9, 9b) pour venir s'appuyer contre les poutres (5a, 5b) et le dispositif de préhension (37) présente deux bras (39a, 39b) dont chacun porte, à son extrémité, un coin de séparation (40) approprié pour venir s'engrener entre les poignées d'appui (9a, 9b) de deux plaques filtrantes voisines (8).

15. Installation selon la revendication 14, caractérisée en ce que les bras (39a, 39b) sont munis de fentes (42) ouvertes vers le bas et les plaques filtrantes (8) portent latéralement des broches d'entraînement (10a, 10b) qui s'adaptent avec une tolérance extrêmement minime dans lesdites fentes (42).

16. Installation selon les revendications 13 à 15, caractérisée en ce que le dispositif de préhension (37) est équipé de cliquets de préhension (43a, 43b) qui sont appropriés pour l'engrènement avec des dispositifs d'encliquetage disposés latéralement contre les plaques filtrantes (8) dans la zone de leurs extrémités supérieures.

17. Installation selon les revendications 1 à 16, caractérisée en ce qu'au(x) filtre(s)-presse(s) (1), est attribuée une installation de nettoyage (12) disposée à côté de lui ou à côté d'eux en direction longitudinale.

18. Installation selon les revendications 1 à 16, caractérisée en ce qu'elle présente au moins deux filtres-presses (1) disposés en alignement, auxquels est attribuée une installation de nettoyage (12) disposée entre eux.
